# EUROPEAN PATENT APPLICATION

(11) **EP 3 937 291 A1**
(43) Date of publication of application: **12.01.2022**
(21) Application number: 20916246.0
(22) Date of filing: 31.01.2020
(51) Int. Cl.: H01M 10/42, H01M 10/54, G06Q 10/00, G06Q 50/10

(54) **BATTERY RECYCLING SUPPORT SYSTEM**

(71) Applicant: Toyo System Co., Ltd., Iwaki-shi, Fukushima 972-8316 (JP)
(72) Inventor: MUNAKATA, Ichiro, Iwaki-shi, Fukushima 972-8316 (JP); TANNO, Satoshi, Iwaki-shi, Fukushima 972-8316 (JP); EBISAWA, Noboru, Iwaki-shi, Fukushima 972-8316 (JP); SHOJI, Hideki, Iwaki-shi, Fukushima 972-8316 (JP)
(74) Representative: Schön, Christoph
(86) International application number: PCT/JP2020/003699
(87) International publication number: WO 2021/152826

(57) **Abstract**

Provided is a battery recycling support system capable of determining an application of a battery and efficiently supporting reuse of the battery. The battery recycle support system includes: a recognition unit configured to recognize a degradation state of a battery; a storage unit configured to store application information indicating an application of the battery according to the degradation state of the battery; a determination unit configured to determine the application of the battery, based on the degradation state of the battery and the application information; and an output unit configured to output a determination result of the determination unit.

## Description

### Technical Field

The present invention relates to a battery recycling (reuse) support system.

### Background Art

Systems capable of recycling electronic devices such as mobile phones are conventionally known (for example. Patent Literature 1).

With a system in Patent Literature 1, an owner of an electronic device such as a mobile phone can determine the state of the electronic device using an electronic kiosk and sell the electronic device for resale or recycling to thus receive compensation in cash or the like.

### Citation List

### Patent Literature

Patent Literature 1: Japanese Patent Application Laid-Open No. 2017-188124

### Summary of Invention

### Technical Problem

The retrieval device in Patent Literature 1 may be used as a system that supports battery reuse.

A battery gradually degrades in performance as a result of repeating charge and discharge. If the degradation state progresses, the use of the battery in the current application cannot be continued.

There are various applications of batteries, and performance requirements of batteries differ greatly among applications. Accordingly, even when the degradation state progresses and the use of the battery in the current application cannot be continued, the battery is reusable for another application in some cases.

The system in Patent Literature 1 simply determines whether the determination object is a resale object (that is, whether the use of the determination object in the current application can be continued), and does not determine whether the determination object is reusable for another application.

The system in Patent Literature 1 thus has a problem in that, even though the battery is reusable for another application, the battery is determined to be recycled if it is not a resale object, which hinders effective use of the battery that is reusable for another application.

In view of such problem of the conventional technique, the present invention has an object of providing a battery recycling (reuse) support system capable of determining an application of a battery and efficiently supporting reuse of the battery.

### Solution to Problem

A battery recycling support system includes: a recognition unit configured to recognize a degradation state of a battery; a storage unit configured to store application information indicating an application of the battery according to the degradation state of the battery; a determination unit configured to determine the application of the battery, based on the degradation state of the battery recognized by the recognition unit and the application information; and an output unit configured to output a determination result of the determination unit.

According to the present invention, the application information indicating the application of the battery according to the degradation state of the battery is stored.

The battery recycling support system is configured to recognize the degradation state of the battery, determine the application of the battery based on the degradation state of the battery and the application information, and output the determination result.

In this way, a user of the battery recycling support system can know not only whether it is possible to continue to use the battery in the current application but also whether the battery is reusable for another application, based on the degradation state of the battery which is objective information. The battery can therefore be effectively utilized in an appropriate application according to the degradation state of the battery.

Thus, according to the present invention, it is possible to provide a battery recycling support system capable of determining an application of a battery based on the degradation state of the battery and efficiently supporting reuse of the battery.

Preferably, in the battery recycling support system according to the present invention, the determination unit is configured to determine a sale amount that is a consideration obtained when selling the battery for use in the application, according to the degradation state of the battery.

According to the present invention, the battery recycling support system is configured to determine the sale amount which is the consideration when the battery is sold for use in the determined application, according to the degradation state of the battery.

For example, it is assumed that the battery recycling support system according to the present invention is used by a used battery trading company.

With the battery recycling support system having this structure, the system user such as a used battery trading company can know not only the application of the battery but also the amount of the consideration when the battery is sold for use in the application, based on the degradation state of the battery which is objective information. Hence, the system user can price and purchase or sell the battery with confidence.

Thus, according to the present invention, it is possible to provide a battery recycling support system capable of determining an application and a sale amount of a battery based on the degradation state of the battery and efficiently supporting reuse of the battery.

Preferably, the battery recycling support system according to the present invention includes: a calculation unit configured to calculate a usage fee that is a consideration to be paid to a system provider by a system user, based on the sale amount; and a settlement unit configured to settle the usage fee.

According to the present invention, the battery recycling support system is configured to calculate and settle the usage fee which is the consideration to be paid to the system provider by the system user, based on the sale amount of the battery.

When providing the battery recycling support system according to the present invention, the system provider bears the costs required for operating the system, updating application information, and the like. If the system provider bears all of these costs at its own expense, it may be difficult to continue to provide the battery recycling support system.

With the battery recycling support system having this structure, the usage fee is calculated based on the sale amount of the battery, and the system user pays the fee to the system provider.

In this way, the cost burden on the system provider is reduced by the system usage fee, so that the system provider can easily continue to provide the battery recycling support system.

Thus, according to the present invention, it is possible to provide a battery recycling support system capable of determining an application of a battery based on the degradation state of the battery and efficiently supporting reuse of the battery, while reducing the cost burden on the system provider.

Preferably, in the battery recycling support system according to the present invention, the storage unit is configured to store purchase condition information that includes information for identifying a person who wants to purchase the battery for the application and a desired purchase amount of the battery, the determination unit is configured to determine the sale amount based on the desired purchase amount included in the purchase condition information, and the battery recycling support system includes: a purchase/sale unit configured to generate sale information indicating that an owner of the battery sells the battery to the person who wants to purchase the battery and including the sale amount, using the purchase condition information and the application determined by the determination unit; and a calculation unit configured to calculate a usage fee that is a consideration to be paid to a system provider by a system user, based on the sale amount included in the sale information.

The battery recycling support system according to the present invention is configured to store the purchase condition information including the information for identifying the person who wants to purchase the battery for the predetermined application and the desired purchase amount of the battery.

The battery recycling support system is also configured to determine the sale amount of the battery based on the desired purchase amount included in the purchase condition information.

The battery recycling support system is then configured to generate the sale information indicating that the owner of the battery sells the battery to the person who wants to purchase the battery and including the sale amount and calculate the usage fee based on the sale amount, using the purchase condition information and the application.

In this way, the system user such as a used battery trading company can efficiently find a candidate buyer (purchaser) for the battery. Moreover, since the usage fee of the system is calculated based on the sale amount of the battery determined based on the desired purchase amount, the system user pays the usage fee of the system more in conformance with the actual purchase/sale situation.

The system user can therefore purchase or sell the battery with greater confidence.

Thus, according to the present invention, it is possible to provide a battery recycling support system that enables a system user to purchase or sell a battery with greater confidence.

### Brief Description of Drawings

FIG. 1 is a block diagram illustrating an example of an overall structure of a battery recycling support system according to an embodiment.
FIG. 2A is a table illustrating an example of information used for a process by the battery recycling support system according to the embodiment.
FIG. 2B is a table illustrating an example of information used for a process by the battery recycling support system according to the embodiment.
FIG. 2C is a table illustrating an example of information used for a process by the battery recycling support system according to the embodiment.
FIG. 2D is a table illustrating an example of information used for a process by the battery recycling support system according to the embodiment.
FIG. 2E is a table illustrating an example of information used for a process by the battery recycling support system according to the embodiment.
FIG. 2F is a table illustrating an example of information used for a process by the battery recycling support system according to the embodiment.
FIG. 3 is a conceptual diagram illustrating an example of a timetable of a series of processes by the battery recycling support system according to the embodiment.
FIG. 4A is a flowchart illustrating an example of a process by the battery recycling support system according to the embodiment.
FIG. 4B is a flowchart illustrating an example of a process by the battery recycling support system according to the embodiment.
FIG. 4C is a flowchart illustrating an example of a process by the battery recycling support system according to the embodiment.
FIG. 4D is a flowchart illustrating an example of a process by the battery recycling support system according to the embodiment.

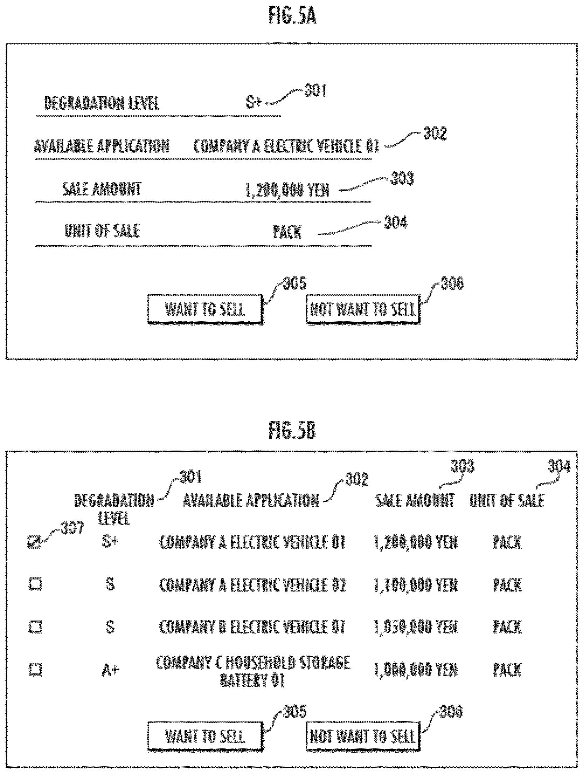

FIG. 5A is an image diagram illustrating an example of output of the battery recycling support system according to the embodiment.
FIG. 5B is an image diagram illustrating an example of output of the battery recycling support system according to the embodiment.

### Description of Embodiments

An embodiment of the present invention will be described below, with reference to the drawings.

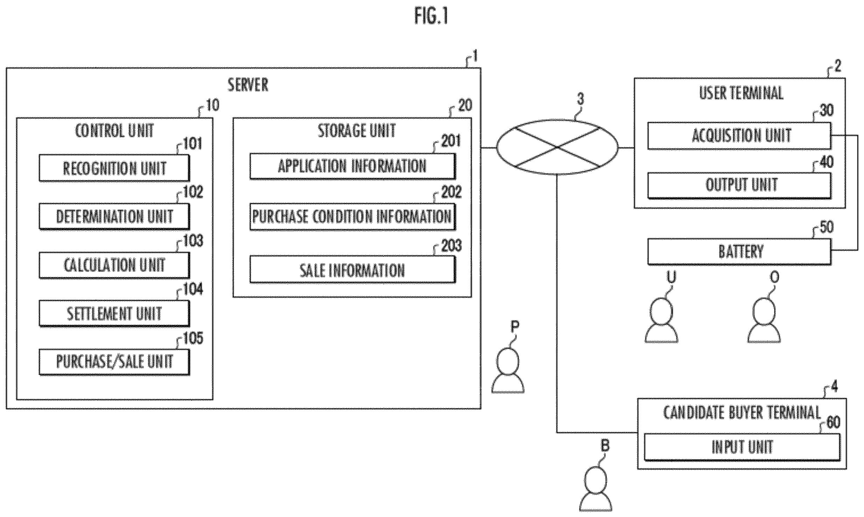

First, an example of the overall structure of the battery recycling (reuse) support system according to this embodiment will be described below, with reference to FIG. 1.

The battery recycling support system according to this embodiment includes a server 1 and a user terminal 2. The server 1 and the user terminal 2 are connected communicably with each other via a network 3. The battery recycling support system may include a candidate buyer terminal 4 communicably connected to the server 1 via the network 3.

The server 1 is a computer including a control unit 10 and a storage unit 20.

The user terminal 2 is, for example, a device including an acquisition unit 30 and output unit 40, and may be a special-purpose device, or a general-purpose device such as a personal computer, a smartphone, or a tablet terminal.

Examples of a user U of the user terminal 2 include a used battery trading company, a used car company, and an automobile repair company. An owner O of the battery may be the user U.

The network 3 is a wired or wireless network, and is, for example, a local area network (LAN), a wide area network (WAN), or an Internet communication network.

The candidate buyer terminal 4 is a device including an input unit 60 that receives the below-described purchase condition information 202 input by a candidate buyer B of the battery and stores the purchase condition information 202 in the storage unit 20 in the server 1. The candidate buyer terminal 4 may be a special-purpose device, or a general-purpose device such as a personal computer, a smartphone, or a tablet terminal.

The input unit 60 is an input device that receives information input by the candidate buyer B, and is, for example, a keyboard, a mouse, a touch pad, a touch panel, and/or other pointing devices.

The control unit 10 in the server 1 is composed of an arithmetic processing unit such as a central processing unit (CPU), a memory, an input/output (I/O) device, and the like. The control unit 10 may be composed of one processor or a plurality of processors communicable with each other.

The control unit 10 reads a predetermined program and executes it, thus functioning as a recognition unit 101, a determination unit 102, a calculation unit 103, a settlement unit 104, and a purchase/sale unit 105 that perform the below-described processes.

The recognition unit 101 recognizes the degradation state of a battery 50, based on information acquired by the acquisition unit 30.

The determination unit 102 determines an application of the battery 50, based on the degradation state of the battery 50 recognized by the recognition unit 101 and application information 201 stored in the storage unit 20.

The determination unit 102 also determines a sale amount which is a consideration obtained when selling the battery 50 for use in the application, according to the degradation state of the battery 50.

The determination unit 102 may determine the sale amount based on a desired purchase amount included in the purchase condition information 202 stored in the storage unit 20 (for example, determine the highest desired purchase amount in each application as the sale amount), or, for example, acquire a transaction price of a battery from a price site or the like via the Internet and determine the sale amount from the acquired transaction price.

The calculation unit 103 calculates a usage fee which is a consideration to be paid to a system provider P by the system user U, based on the sale amount of the battery 50 determined by the determination unit 102.

The settlement unit 104 settles the usage fee which is the consideration to be paid to the system provider P by the system user U.

The purchase/sale unit 105 generates sale information 203 indicating that the owner O of the battery 50 sells the battery to a person who wants to purchase the battery 50 and including the sale amount, using the purchase condition information 202 and the application of the battery 50 determined by the determination unit 102.

The storage unit 20 is composed of a storage device such as a read only memory (ROM), a random access memory (RAM), or a hard disk drive (HDD), and stores application information 201, purchase condition information 202, sale information 203, and processing results of the control unit 10.

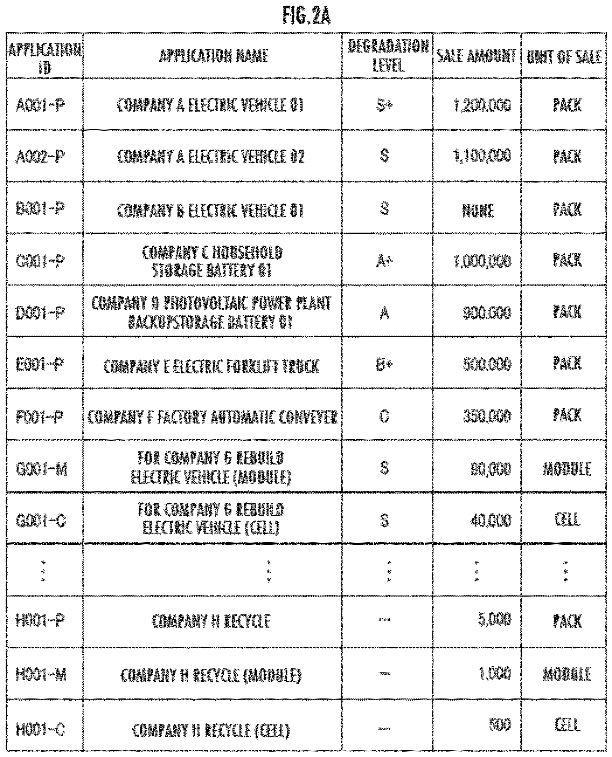

The application information 201 is information indicating an application of a battery according to the degradation state of the battery. For example, the application information 201 includes an application ID, an application name, a degradation level, a sale amount, and a unit of sale, as illustrated in FIG. 2A.

The application ID is composed of a combination of alphabets, numbers, and symbols including, for example, an identifier representing the name of the buyer of the battery and the application of the battery.

The application name is a character string representing the name of the application of the battery corresponding to the application ID. Examples of the application name include rough applications such as "reuse for electric vehicle", "reuse for stationary storage battery (ESS)", and "recycle", and more detailed applications such as "company A electric vehicle 01", "for company G rebuild electric vehicle (module)", and "company H recycle (cell)" as illustrated in FIG. 2A.

The degradation level is, for example, an identifier representing the level of the degradation state of the battery, and is composed of a combination of alphabets and symbols. For example, the degradation level "S+" is the best state including the unused state, and the degradation state progresses in the order of A, B, C....

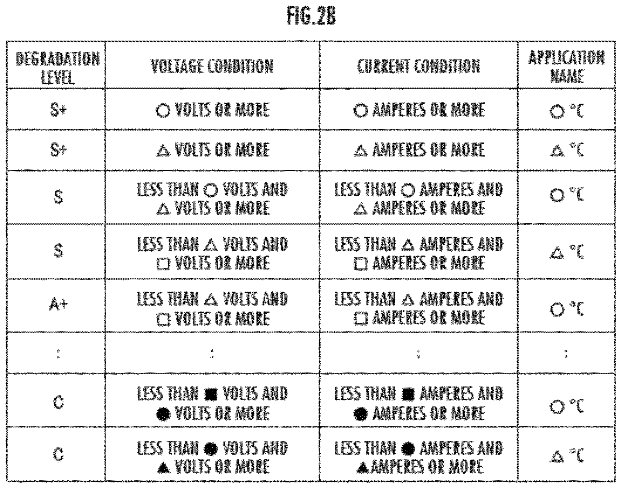

Criteria for determining the degradation level of the battery are, for example, the current value, voltage value, and ambient temperature of the battery. The values of the voltage condition, the current condition, and the temperature condition corresponding to each degradation level are stored in a table illustrated in FIG. 2B as an example. These values can be changed as appropriate.

In this example, the voltage condition, the current condition, and the temperature condition of the battery 50 are used as the determination criteria of the degradation level. If the below-described charge/discharge history is acquirable, the charge/discharge history may be used as a determination criterion of the degradation level. In this case, the value relating to the charge/discharge history is stored in the table illustrated in FIG. 2B, in addition to or instead of the values of the voltage condition, the current condition, and the temperature condition.

Alternatively, the degradation state of the battery may be represented by the degree of decrease of the charge capacity of the battery. In this case, the application information 201 includes information indicating the degree of decrease of the charge capacity of the battery in addition to or instead of the degradation level. Examples of the information indicating the degree of decrease of the charge capacity of the battery include values such as "80% or more", "less than 80% and ○% or more", and "less than ○%" where the charge capacity in the unused state is 100%.

The sale amount is the amount of the consideration obtained when the battery 50 is sold for use in the application. The unit of sale is a unit of sale of the battery corresponding to the application. Examples of the unit of sale include a cell, a module which is a group of cells, and a pack which is a group of modules.

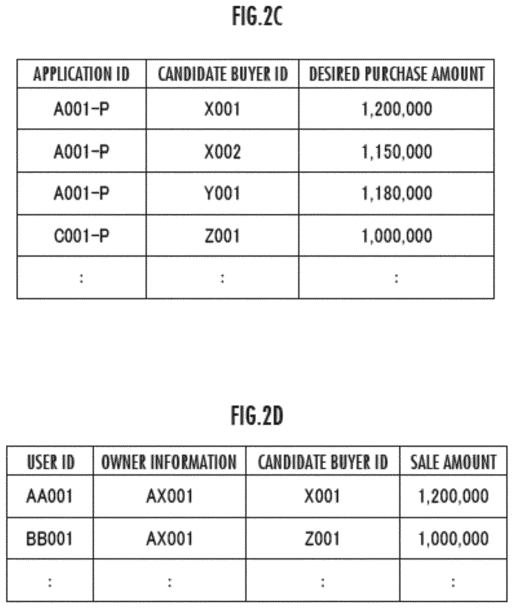

The purchase condition information 202 is information about a person who wants to purchase a battery for a predetermined application, and includes, for example, an application ID, a candidate buyer ID, and a desired purchase amount as illustrated in FIG. 2C. In the purchase condition information 202, the desired purchase amount of each different candidate buyer B may be stored for the same application, or different desired purchase amounts of the same candidate buyer B may be stored for the same application.

The candidate buyer ID is information for identifying a candidate buyer B who wants to purchase the battery 50 for the application, and is composed of a combination of alphabets, numbers, and symbols.

The desired purchase amount is a desired amount in the case where the candidate buyer B purchases the battery 50 for the application.

The sale information 203 is information indicating that the owner O of the battery 50 sells the battery 50 to a person who wants to purchase the battery 50, and includes a user ID, owner information, a candidate buyer ID, and a sale amount as illustrated in FIG. 2D.

The owner information is information for identifying the owner O of the battery, and is composed of, for example, a combination of alphabets, numbers, and symbols including an identifier representing the name of the owner O of the battery.

The acquisition unit 30 is a device that acquires information relating to the degradation state of the battery 50, and is composed of, for example, a voltage sensor, a current sensor, and a temperature sensor. If the charge/discharge history of the battery 50 is acquirable, the acquisition unit 30 may include an acquisition device that acquires the charge/discharge history, in addition to or instead of the foregoing sensors.

For example, the charge/discharge history is information of the number of charge/discharge operations, from which percentage to which percentage of the charge state charge/discharge is performed by each charge/discharge operation, the value of voltage or current in the charge/discharge operation, and the time taken for the charge/discharge operation, and the like.

The acquisition unit 30 may be not composed of a device that automatically acquires information from the battery 50, such as a sensor or an acquisition device. For example, the acquisition unit 30 may be composed of an input device that receives input of information relating to the degradation state of the battery 50 from the system user U.

The acquisition unit 30 and the user terminal 2 are communicably connected to each other using, for example, a cable. Alternatively, the acquisition unit 30 and the user terminal 2 may be communicably connected to each other using a wired or wireless network such as a local area network (LAN), a wide area network (WAN), or an Internet communication network. The acquisition unit 30 may be integrally formed with the user terminal 2.

The output unit 40 is a part that displays information output to the user from the battery recycling support system, and is, for example, a liquid crystal display or an organic EL display.

The battery 50 is any of various batteries for applications such as in-vehicle batteries for electric vehicles, batteries for household storage batteries, and batteries for electric transportation equipment (carts, forklift trucks, etc.), personal computers, mobile phones, etc. For example, the battery 50 is a lead storage battery, a nickel-cadmium battery, a nickel hydrogen battery, a lithium ion battery, or a fuel battery. The electrolyte of the battery 50 may be liquid or solid.

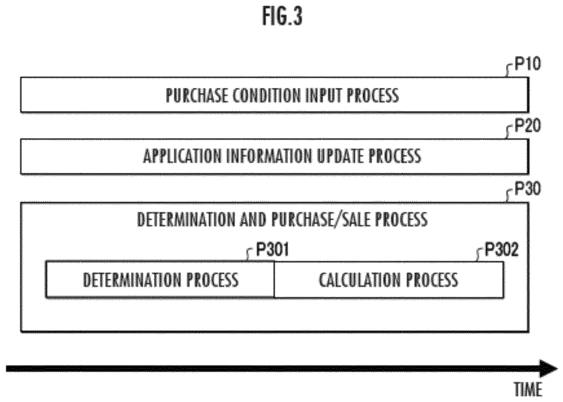

A series of processes by the battery recycling support system according to this embodiment will be described below, with reference to FIG. 3.

First, the battery recycling support system performs a purchase condition input process (FIG. 3, P10) and an application information update process (FIG. 3, P20), as preparation for determining an application of the battery 50 or performing purchase/sale of the battery. Each process will be described in detail later.

In the purchase condition input process (FIG. 3, P10), the candidate buyer terminal 4 receives input of the purchase condition information 202 from the candidate buyer B who wants to purchase the battery 50, and transmits the purchase condition information 202 to the server 1. The candidate buyer terminal 4 can repeatedly receive input of the purchase condition information 202 from the candidate buyer B at any timings.

In the application information update process (FIG. 3, P20), the server 1 updates the application information 201 based on the purchase condition information 202 received from the candidate buyer terminal 4. The server 1 performs the application information update process each time the purchase condition information 202 is received from the candidate buyer terminal 4, or repeatedly performs the application information update process at any timings.

The battery recycling support system then performs a determination and calculation process (FIG. 3, P30) including a determination process (FIG. 3, P301) and a calculation process (FIG. 3, P302), either in response to operation of the user U at any timing or automatically.

### (Purchase condition input process)

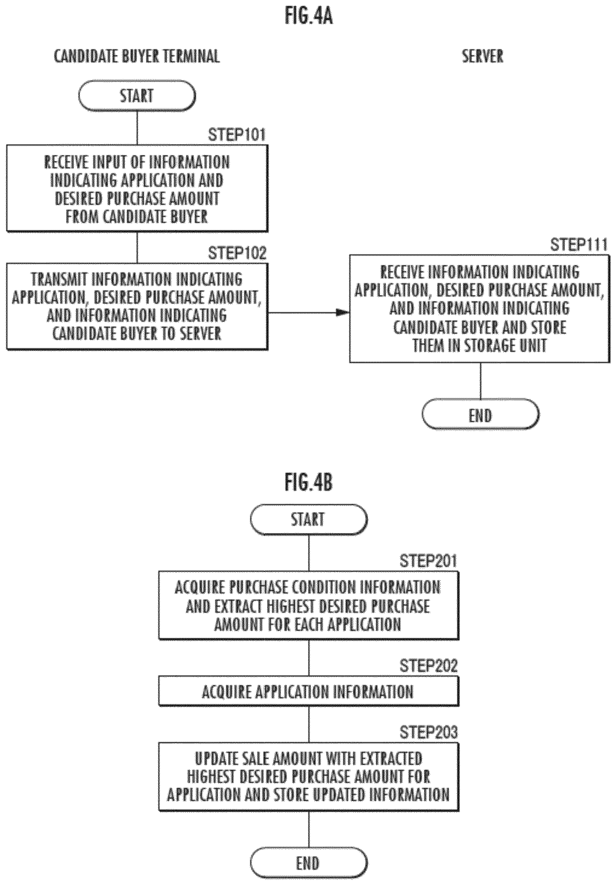

The purchase condition input process will be described below, with reference to FIG. 4A. When the purchase condition input process starts, first the input unit 60 in the candidate buyer terminal 4 receives input of information (application ID) indicating an application and a desired purchase amount from the candidate buyer B (FIG. 4A, STEP 101).

The input unit 60 transmits the input information indicating the application and desired purchase amount and information (candidate buyer ID) indicating the candidate buyer B to the server 1 (FIG. 4A, STEP 102).

The server 1 receives the information indicating the application, the desired purchase amount, and the information indicating the candidate buyer from the candidate buyer terminal 4 and stores them in the storage unit 20 (FIG. 4A, STEP 111), and then ends the process.

### (Application information update process)

The application information update process will be described below, with reference to FIG. 4B. When the application information update process starts, first the server 1 acquires the purchase condition information 202 stored in the storage unit 20, and extracts the highest desired purchase amount for each application (FIG. 4B, STEP 201).

The server 1 then acquires the application information 201 stored in the storage unit 20 (FIG. 4B, STEP 202).

The server 1 then updates, for each application included in the application information 201, the sale amount with the highest desired purchase amount for the application extracted in STEP 201 and stores the updated information (FIG. 4B, STEP 203), and then ends the process. Here, for any application for which there is no desired purchase amount (i.e. there is no candidate buyer B who wants to purchase the battery 50 for the application) from among the applications included in the application information 201, for example, the server 1 may store a desired purchase amount indicating "none".

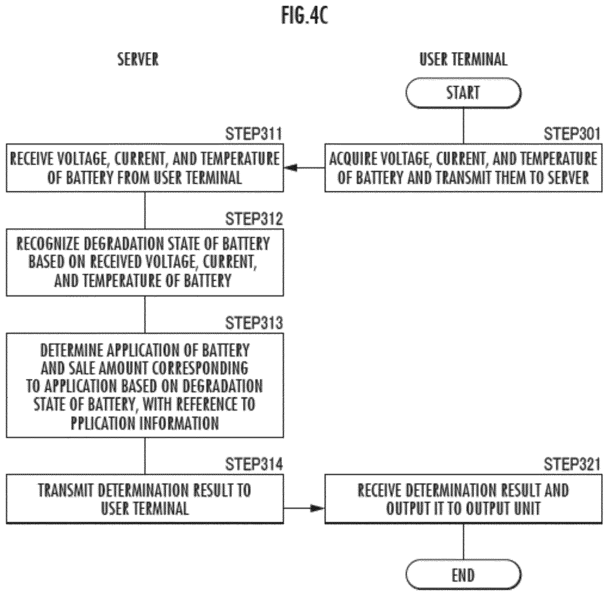

An example of the determination process in the determination and calculation process will be described below, with reference to FIG. 4C.

### (Determination process)

When the determination process starts, first the acquisition unit 30 in the user terminal 2 acquires the voltage, current, and temperature of the battery 50 in response to operation of the user U, and transmits the voltage, current, and temperature of the battery 50 to the server 1 (FIG. 4C, STEP 301).

Here, the acquisition unit 30 may acquire the voltage, current, and temperature of the battery 50 in a state in which the battery 50 is removed from a device to which the battery 50 supplies power, such as an electric vehicle, a household storage battery, electric transportation equipment, a personal computer, or a mobile phone, or acquire the voltage, current, and temperature of the battery 50 in a state in which the battery 50 is attached or connected to the device.

The recognition unit 101 in the server 1 receives the voltage, current, and temperature of the battery 50 from the user terminal 2 (FIG. 4C, STEP 311). The recognition unit 101 then recognizes the degradation state of the battery 50 based on the received voltage, current, and temperature of the battery 50 (FIG. 4C, STEP 312).

Various techniques may be used to recognize the degradation state of the battery 50 based on the voltage, current, and temperature. For example, the table associating the voltage, current, and temperature of the battery 50 with the degradation level as illustrated in FIG. 2B is stored in the storage unit 20 beforehand, and the recognition unit 101 recognizes the degradation level corresponding to the received voltage, current, and temperature of the battery 50 with reference to the table.

Next, the determination unit 102 in the server 1 determines an application of the battery 50 and a sale amount corresponding to the application based on the degradation state of the battery 50 recognized in STEP 312, with reference to the application information 201 stored in the storage unit 20 (FIG. 4C, STEP 313).

For example, suppose the degradation state (degradation level) of the battery 50 recognized by the recognition unit 101 in STEP 312 is "S+". Since an application whose degradation level is "S+" from among the application stored in the application information 201 is "company A electric vehicle 01" of "A001-P" as illustrated in FIG. 2A, the determination unit 102 determines "company A electric vehicle 01" as the application of the battery 50 and "1,200,000 yen" as the corresponding sale amount, and transmits information including the determined information to the user terminal 2 as the determination result.

Alternatively, in the case where the degradation state (degradation level) of the battery 50 recognized by the recognition unit 101 in STEP 312 is "S+", the determination unit 102 may extract each application whose degradation level is not greater than "S+" and for which there is a sale amount from among the applications stored in the application information 201, determine each of these extracted applications as the application of the battery 50, and transmit information about all of these applications to the user terminal 2 as the determination result.

Alternatively, the information acquired by the acquisition unit 30 and transmitted to the server 1 in STEP 301 may be the degree of decrease of the charge capacity of the battery. In this case, for example, the determination unit 102 in the server 1 is configured to determine the application of the battery based on the received degree of decrease of the charge capacity of the battery. The determination unit 102 then transmits the determination result in STEP 313 to the user terminal 2 (FIG. 4C, STEP 314).

The user terminal 2 receives the determination result from the server 1 and outputs the determination result to the output unit 40 (FIG. 4C, STEP 321), and then ends the process.

FIG. 6A is a diagram illustrating an example of information output by the output unit 40. In FIG. 6A, only information about "company A electric vehicle 01" of "A001-P" whose degradation level is "S+" from among the applications stored in the application information 201 is output.

As the output of the output unit 40, a degradation level 301, an available application 302, a sale amount 303, a unit of sale 304, and icons of buttons for receiving instructions of next operations desired by the user U are displayed, as illustrated in FIG. 6A. In this example, "want to sell" 305 and "not want to sell" 306 are displayed as icons of buttons for receiving instructions of next operations.

In the case where the "want to sell" button 305 is pressed, the user terminal 2 can transmit information instructing to execute a process in the case where the user U wants to sell the battery, to the server 1. In the case where the "not want to sell" button 306 is pressed, the user terminal 2 can transmit information instructing to execute a process in the case where the user U does not want to sell the battery, to the server 1.

FIG. 6B is a diagram illustrating an example of information output by the output unit 40 in the case where the determination unit 102 is configured to extract each application for which the degradation state (degradation level) of the battery 50 recognized by the recognition unit 101 in STEP 312 is not greater and for which there is a sale amount, determine each of these extracted applications as the application of the battery 50, and transmit information about all of these applications to the user terminal 2 as the determination result.

Information relating to each application whose degradation level is not greater than "S+" and for which there is a sale amount from among the applications stored in the application information 201 is output in a list, as illustrated in FIG. 6B. Checkboxes 307 for receiving designation of which application the user U wants to sell the battery for are displayed, too.

With such a structure, the user U of the battery recycling support system can know not only whether it is possible to continue to use the battery 50 in the current application but also whether the battery 50 is reusable for another application, based on the degradation state of the battery 50 which is objective information. The user U or the owner O of the battery 50 can therefore effectively utilize the battery 50 in an appropriate application according to the degradation state of the battery 50.

Moreover, with the battery recycling support system having this structure, the system user U such as a used battery trading company can know not only the application of the battery 50 but also the amount of the consideration when the battery 50 is sold for use in the application, based on the degradation state of the battery 50 which is objective information. Hence, the system user can price and purchase or sell the battery with confidence.

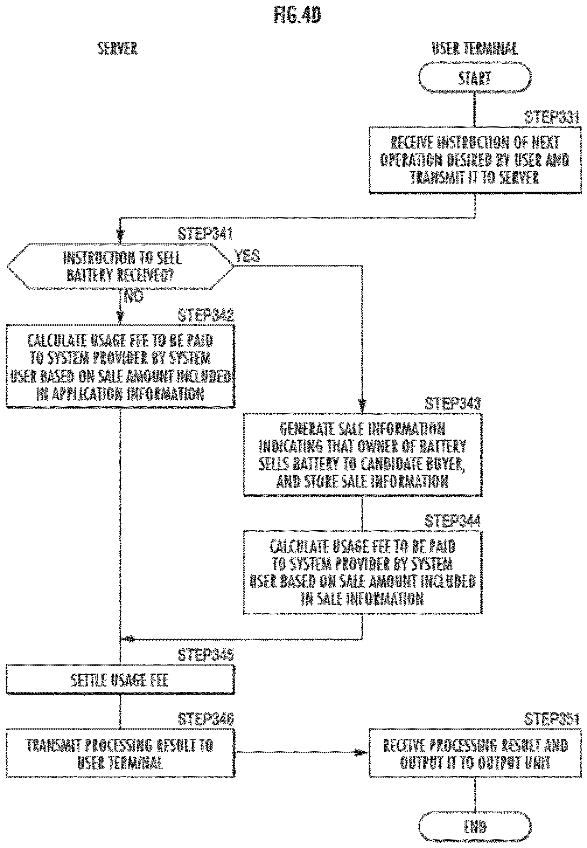

The calculation process in the determination and calculation process will be described below, with reference to FIG. 4D.

### (Calculation process)

When the calculation process starts, first the user terminal 2 receives an instruction of a next operation desired by the user, and transmits the instruction to the server 1 (FIG. 4D, STEP 331).

Having received the instruction of the next operation desired by the user, the calculation unit 103 in the server 1 determines whether an instruction to sell the battery 50 is received (FIG. 4D, STEP 341).

In the case where the determination results in negative (FIG. 4D, STEP 341: NO), the calculation unit 103 calculates a usage fee to be paid to the system provider P by the system user U based on the sale amount included in the application information 201 (FIG. 4D, STEP 342), and then performs the process from STEP 345 onward.

In the case where the determination results in positive (FIG. 4D, STEP 341: YES), the purchase/sale unit 105 generates sale information 203 indicating that the owner O of the battery 50 sells the battery 50 to the candidate buyer B, and stores the sale information 203 in the storage unit 20 (FIG. 4D, STEP 343).

The calculation unit 103 further calculates the usage fee to be paid to the system provider P by the system user U based on the sale amount included in the sale information 203 generated in STEP 343 (FIG. 4D, STEP 344), and then performs the process from STEP 345 onward.

For example, the calculation unit 103 calculates the usage fee to be paid to the system provider P by the system user U in the following manner.

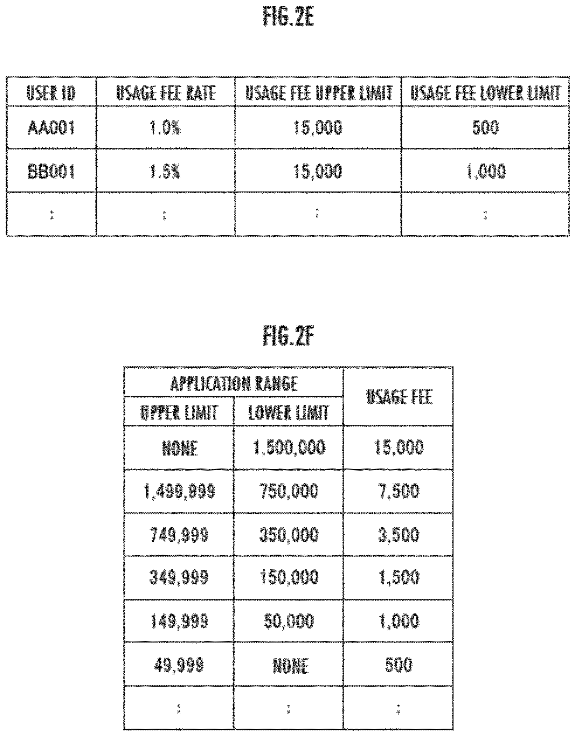

First, the calculation unit 103 recognizes the sale amount included in the application information 201 or the sale information 203. Next, with reference to the correspondence table between sale amounts and usage fees as illustrated in FIG. 2E or 2F, the calculation unit 103 acquires the usage fee corresponding to the sale amount, and sets the usage fee as the usage fee to be paid to the system provider P by the system user U.

Various methods may be used for usage fee calculation. The calculation unit 103 is configured to, for example, calculate a usage fee based on a usage fee rate set for each user ID as illustrated in FIG. 2E. For example, in the case where the user ID of the current user U is AA001 and the sale amount is 1,200,000 yen, the amount, 12,000 yen, obtained by multiplying the sale amount by the corresponding usage fee of 1.0% is first calculated as the usage fee. In this example, the upper limit of the usage fee corresponding to the user U whose user ID is AA001 is set to 11,000 yen. Since the foregoing calculation result exceeds the upper limit, the usage fee is calculated at 11,000 yen. The lower limit of the usage fee is set to 500 yen. Accordingly, in the case where the amount obtained by multiplying the sale amount by the usage fee rate is below 500 yen, the usage fee is calculated at 500 yen.

As another example, the calculation unit 103 may calculate the usage fee to be paid to the system provider P by the system user U, with reference to the correspondence table between sale amounts and usage fees as illustrated in FIG. 2F. In this case, if the sale amount is 1,200,000 yen, the sale amount is within an application range of an upper limit of 1,499,999 yen and a lower limit of 750,000 yen, and the corresponding usage fee is 7,500 yen, and therefore the usage fee is calculated at 7,500 yen.

The settlement unit 104 settles the usage fee, based on the usage fee calculated by the calculation unit 103 (FIG. 4D, STEP 345).

The settlement unit 104 may also be configured to settle the sale amount based on the sale information 203 generated by the purchase/sale unit 105 in STEP 343.

Following this, the server 1 transmits the processing result in STEP 341 to STEP 345 to the user terminal 2 (FIG. 4D, STEP 346).

The user terminal 2 receives the processing result from the server 1 and outputs the processing result to the output unit (FIG. 4D, STEP 351), and then ends the process.

Thus, the usage fee is calculated based on the sale amount of the battery 50, and the system user U pays the usage fee of the battery recycling support system to the system provider P. In this way, the cost burden on the system provider P is reduced by the system usage fee, so that the system provider P can easily continue to provide the battery recycling support system.

Further, the system user U such as a used battery trading company can efficiently find a candidate buyer B of the battery. Moreover, since the usage fee of the system is calculated based on the sale amount of the battery determined based on the desired purchase amount, the system user U pays the usage fee of the system more in conformance with the actual purchase/sale situation. The system user U can therefore trade the battery with greater confidence.

As described above, according to the present invention, it is possible to provide a battery recycling support system capable of determining an application of a battery 50 and efficiently supporting reuse of the battery 50.

While the embodiments of the present invention have been described above with reference to the drawings, the present invention is not limited to such. Various modifications can be made without departing from the gist of the present invention.

For example, the user terminal 2 may be configured to pass the voltage, current, and temperature of the battery 50 acquired by the acquisition unit 30 to the server 1 via an external storage medium such as a USB memory or a CD-ROM. In this case, the processing result in the server 1 may be output via a display device in the server 1.

For example, the determination unit 102 may be configured to determine the degradation level of the battery 50 using a predetermined algorithm or evaluation formula based on the information acquired by the acquisition unit 30, without using the table as illustrated in FIG. 2B.

The determination unit 102 may be configured to determine the degradation state of the battery 50 not as a degradation level but by calculating, for example, a score from 100 points to 0 points using a predetermined algorithm or evaluation formula based on the information acquired by the acquisition unit 30.

For example, the server 1 may be configured to, in the application information update process, acquire the purchase condition information 202 stored in the storage unit 20, extract the highest desired purchase amount and the lowest desired purchase amount for each application, and, for each application included in the application information 201, update and store the sale amount in a form representing a desired purchase amount range such as "○ yen to Δ yen" with the extracted highest desired purchase amount and lowest desired purchase amount for the application.

For example, the determination unit 102 may be configured to determine a rental fee such as "monthly fee of ○ yen" or "annual fee of ○ yen" according to the degradation state of the battery, in addition to or instead of the sale amount according to the degradation state of the battery.

### Description of Reference Numerals

- 1: server
- 2: user terminal
- 3: network
- 4: candidate buyer terminal
- 20: storage unit
- 30: acquisition unit
- 40: output unit
- 50: battery
- 101: recognition unit
- 102: determination unit
- 103: calculation unit
- 104: settlement unit
- 105: purchase/sale unit
- B: candidate buyer
- O: owner
- P: system provider
- U: system user

## Claims

1. A battery recycling support system comprising:
a recognition unit configured to recognize a degradation state of a battery;
a storage unit configured to store application information indicating an application of the battery according to the degradation state of the battery;
a determination unit configured to determine the application of the battery, based on the degradation state of the battery recognized by the recognition unit and the application information; and
an output unit configured to output a determination result of the determination unit.

2. The battery recycling support system according to claim 1, wherein the determination unit is configured to determine a sale amount that is a consideration obtained when selling the battery for use in the application, according to the degradation state of the battery.

3. The battery recycling support system according to claim 2, comprising:
a calculation unit configured to calculate a usage fee that is a consideration to be paid to a system provider by a system user, based on the sale amount; and
a settlement unit configured to settle the usage fee.

4. The battery recycling support system according to claim 2 or 3, wherein the storage unit is configured to store purchase condition information that includes information for identifying a person who wants to purchase the battery for the application and a desired purchase amount of the battery,
wherein the determination unit is configured to determine the sale amount based on the desired purchase amount included in the purchase condition information, and
wherein the battery recycling support system comprises:
a purchase/sale unit configured to generate sale information indicating that an owner of the battery sells the battery to the person who wants to purchase the battery and including the sale amount, using the purchase condition information and the application determined by the determination unit; and
a calculation unit configured to calculate a usage fee that is a consideration to be paid to the system provider by the system user, based on the sale amount included in the sale information.
